# FASCICULE DE BREVET EUROPEEN

(11) **EP 3 423 349 B1**
(45) Date de publication et mention de la délivrance du brevet: **25.11.2020**
(21) Numéro de dépôt: 17707563.7
(22) Date de dépôt: 28.02.2017
(51) Int. Cl.: B64C 1/34, B64C 39/02

(54) **AERONEF SANS PILOTE TELECOMMANDE ET PLIABLE**
FERNGESTEUERTES UNBEMANNTES ZUSAMMENKLAPPBARES FLUGZEUG
REMOTE-CONTROLLED UNMANNED FOLDABLE AIRCRAFT

(30) Priorité: 03.03.2016 FR 1651800
(43) Date de publication de la demande: 09.01.2019
(73) Titulaire: Diodon Drone Technology, 31000 Toulouse (FR)
(72) Inventeur: TOURNET, Antoine Jacques Mistral, 31000 Toulouse (FR); LUCIANI, Roman Guillaume Julien, 31400 Toulouse (FR); LOPEZ, Marco, 31120 Lacroix-Falgarde (FR); LOLIES, Tom Patrick, 38190 Bernin (FR)
(74) Mandataire: Argyma
(86) Numéro de dépôt international: PCT/EP2017/054609
(87) Numéro de publication internationale: WO 2017/148923

(56) Documents cités:
- EP-A2- 1 600 370
- WO-A1-2015/000088
- WO-A1-2016/024276
- FR-A1- 2 539 383
- US-A1- 2003 192 985
- US-A1- 2015 102 159

## Description

### DOMAINE TECHNIQUE GENERAL ET ART ANTERIEUR

La présente invention concerne le domaine des aéronefs sans pilote télécommandés qui sont connus de l'homme du métier sous la désignation de « drone ». La présente invention concerne plus particulièrement les drones qui sont transportables par un seul utilisateur, par exemple, dans un sac à dos.

Un aéronef sans pilote télécommandé, par la suite désigné drone, comporte une structure rigide sur laquelle sont montés plusieurs moteurs, généralement au nombre de quatre, pour faire voler le drone, en particulier, suite à un décollage vertical. Le drone comporte également un module de gestion, attaché à la structure rigide du drone, qui est adapté pour recevoir des commandes de manière sans fil et piloter les moteurs en fonction des commandes reçues. Un utilisateur peut ainsi diriger le drone lors de son vol, par exemple, au moyen d'une télécommande ou d'un téléphone. De manière connue, le drone peut également comporter un équipement d'enregistrement (caméra vidéo, etc.) qui est fixé à la structure rigide du drone et est relié fonctionnellement au module de gestion. De manière connue, le module de gestion comporte également une batterie d'alimentation afin d'alimenter électriquement les moteurs et les équipements du drone.

Afin de permettre à un utilisateur de transporter facilement un drone à son lieu d'utilisation, il est connu des drones de faible dimension. Néanmoins, si le drone possède une envergure trop faible, sa stabilité peut être réduite. Aussi, il est connu un drone qui est pliable entre une position de stockage, dans laquelle son envergure est réduite, et une position d'utilisation, dans laquelle son envergure est importante. A titre d'exemple, la structure rigide du drone comporte plusieurs bras articulés au moyen de charnières afin de permettre de limiter l'envergure du drone lors de son stockage. En pratique, les moteurs du drone sont fixés aux extrémités des bras articulés et se replient vers le centre du drone en position de stockage.

De tels drones pliables présentent de nombreux inconvénients. En effet, les bras articulés sont fragiles et peuvent aisément se détériorer en cas de choc. En outre, les charnières sont sujettes à l'usure, ce qui déforme le bras en position dépliée. Une telle déformation est préjudiciable étant donné qu'elle impacte le positionnement et l'orientation des axes des moteurs, ce qui dégrade le comportement du drone lors du vol (stabilité, etc.).

L'invention a donc pour but de remédier au moins à certains de ces inconvénients en proposant un aéronef sans pilote télécommandé qui soit résistant aux chocs, aisément transportable tout en demeurant de construction simple.

De manière incidente, on connait un drone comportant une structure gonflable par la demande de brevet WO2014207732 mais celle-ci n'est pas pliable. En outre, on connaît le document US 2015/102159 A1 qui est considéré comme l'art antérieur le plus proche et décrit les caractéristiques du préambule de la revendication 1

### PRESENTATION GENERALE DE L'INVENTION

A cet effet, l'invention concerne un aéronef sans pilote télécommandé et pliable selon la revendication 1.

Grâce à l'invention, l'aéronef peut être plié de manière pratique étant donné qu'une fois dégonflée, la structure de support présente plusieurs points de pliage selon des angles divers et variés. Ainsi, en position de stockage, l'aéronef peut être rangé dans différents types de conteneurs en particulier dans un sac à dos de forme classique. De manière avantageuse, la structure de support peut recouvrir les moteurs afin de les protéger lors du transport, ce qui améliore leurs durées de vie. Par ailleurs, une structure de support gonflable offre une grande résistance aux chocs et est apte à flotter à la surface de l'eau.

Selon l'invention, la structure de support comporte une pluralité de branches gonflables, au moins un moteur étant fixé à chaque branche gonflable. Ainsi, les branches permettent d'écarter les moteurs les uns par rapport aux autres pour augmenter l'envergure de l'aéronef lors de son utilisation. En outre, une telle branche gonflable autorise une grande liberté de pliage selon sa longueur. De manière préférée, chaque branche s'étend axialement.

De préférence, chaque moteur est fixé à une extrémité d'une branche gonflable de manière à maximiser l'envergure en position d'utilisation et améliorer sa stabilité.

De préférence encore, chaque branche gonflable s'étendant axialement, chaque moteur est fixé à la surface supérieure ou à la surface inférieure d'une branche gonflable de la structure. Autrement dit, le moteur ne s'étend pas selon l'axe de ladite branche. Les extrémités axiales des branches étant gonflables, ces dernières peuvent avantageusement encaisser des chocs, ce qui augmente la durée de vie de l'aéronef.

De manière préférée, les branches gonflables forment une étoile afin que les moteurs soient uniformément répartis à la périphérie de l'aéronef.

Selon un aspect préféré, l'aéronef comporte un module de gestion relié auxdits moteurs par une pluralité de câbles électriques élémentaires. Un tel module de gestion permet de commander lesdits moteurs. De manière préférée, le module de gestion comporte une batterie d'alimentation.

De préférence, le module de gestion comporte un organe rigide solidaire de la structure de support pour positionner précisément les branches gonflables les unes par rapport aux autres. De manière préférée, ledit organe rigide se présente sous la forme d'une étoile.

De préférence, la structure de support comporte une enveloppe intérieure gonflable et une enveloppe extérieure de protection. Ainsi, l'enveloppe intérieure est libre de se déformer tout en étant protégée par l'enveloppe extérieure. De manière préférée, l'enveloppe intérieure est extensible tandis que l'enveloppe extérieure est non extensible. Ainsi, les dimensions de la structure de support en position d'utilisation sont définies par l'enveloppe extérieure. L'enveloppe extérieure est l'élément structurel de l'aéronef et permet de faire transiter les contraintes mécaniques des moteurs.

De préférence, l'enveloppe extérieure possède une section circulaire de manière à répartir de manière uniforme et homogène les efforts de l'enveloppe intérieure gonflable sur la surface intérieure de l'enveloppe extérieure.

De préférence, la structure de support comporte au moins un câble électrique élémentaire disposé entre l'enveloppe intérieure gonflable et l'enveloppe extérieure de protection. Un tel agencement permet à la structure de support de se plier avec la connectique électrique.

De manière préférée, chaque branche gonflable comporte des moyens d'ouverture de manière à accéder au volume intérieur de ladite branche gonflable. Ainsi, l'utilisateur peut aisément accéder au lieu de montage du moteur, ce qui est avantageux en cas de maintenance. De préférence, les moyens d'ouverture permettent un accès au volume intérieur de l'enveloppe extérieure de protection. De préférence encore, les moyens d'ouverture permettent également un accès au volume intérieur de l'enveloppe intérieure gonflable.

De préférence, les moyens d'ouverture sont situés à proximité du lieu de montage du moteur, de préférence, au niveau de l'extrémité de la branche gonflable. De manière préférée, la branche s'étendant axialement, les moyens d'ouverture sont situés au niveau de l'extrémité axiale de la branche gonflable.

De manière préférée, chaque branche gonflable comporte un organe rigide de fixation d'un moteur. Ainsi, le moteur est fixé de manière précise et fiable à un organe de fixation qui demeure rigide même en position de stockage. L'organe de fixation permet de garantir le parallélisme des axes des moteurs en position d'utilisation.

De préférence, ledit organe de fixation est monté de manière solidaire à l'enveloppe extérieure de protection. Autrement dit, l'organe de fixation forme une interface de positionnement du moteur sur l'enveloppe extérieure pour garantir un positionnement précis. De manière préférée, l'organe de fixation est monté dans un logement de l'enveloppe extérieure de protection, en particulier, un fourreau. De préférence encore, l'organe de fixation est fixé sur la surface supérieure ou inférieure de l'enveloppe extérieure. De préférence encore, l'organe de fixation est cintré de manière à épouser la forme de la surface extérieure de la branche gonflable en position d'utilisation.

Selon un aspect préféré, l'aéronef comporte uniquement quatre moteurs afin d'assurer un compromis entre performance et compacité.

### PRESENTATION DES FIGURES

L'invention sera mieux comprise à la lecture de la description qui va suivre, donnée uniquement à titre d'exemple, et se référant aux dessins annexés sur lesquels :
- les figures 1 et 2 sont des représentations schématiques d'un aéronef sans pilote télécommandé selon une forme de réalisation de l'invention en position d'utilisation ;
- les figures 3A, 3B sont des représentations schématique de l'aéronef des figures 1 et 2 en position de stockage vu de dessous et vu de dessus ;
- les figures 4A et 4B sont des vues en coupe d'une portion médiane d'une branche de la structure de l'aéronef en position de stockage et en position d'utilisation ;
- la figure 5 est une représentation schématique d'une extrémité d'une branche équipée d'un moteur ; et
- les figures 6 et 7 sont des vues en perspective et en coupe des moyens de fixation du moteur sur une extrémité d'une branche.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

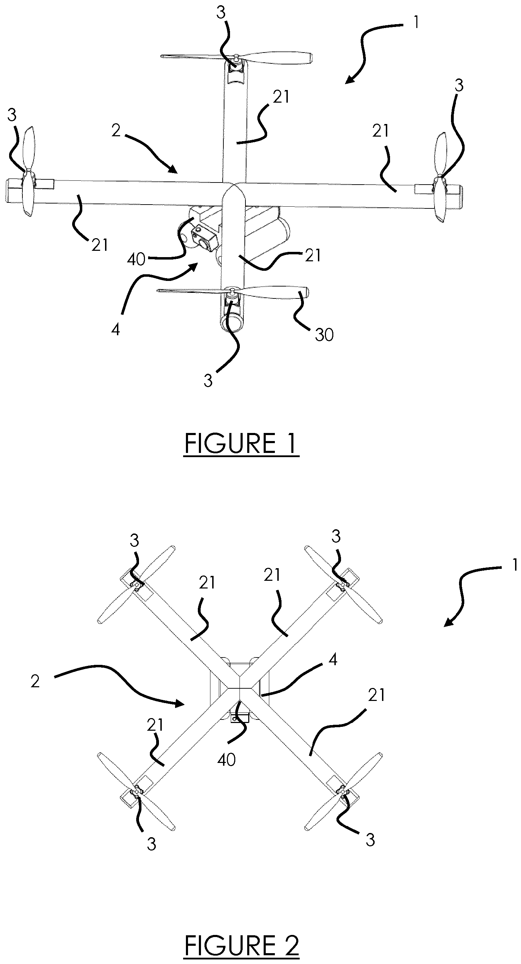

En référence aux figures 1 et 2, il est représenté un aéronef télécommandé sans pilote 1 selon une forme de réalisation de l'invention. Par la suite, l'aéronef sans pilote télécommandé 1 sera désigné drone 1 par souci de clarté et de concision.

Le drone 1 comporte une structure de support 2 sur laquelle sont montés quatre moteurs 3 et un module de gestion 4 pour commander lesdits moteurs 3. Le drone 1 est un quadrirotor.

Comme illustré aux figures 1 et 2, la structure de support 2 s'étend dans un plan horizontal et possède une forme d'étoile comportant quatre branches 21. Néanmoins, il va de soi que le nombre de branches pourrait être différent. Dans cet exemple, les branches 21 sont écartées angulairement de 90° les unes par rapport aux autres de manière à former une structure symétrique.

De préférence, chaque branche 21 possède une section cylindrique dont le diamètre est compris entre 30 mm et 70 mm. De plus, chaque branche 21 possède une longueur comprise entre 30 cm et 70 cm. Il va de soi que les dimensions pourraient être différentes en fonction des dimensions du drone 1.

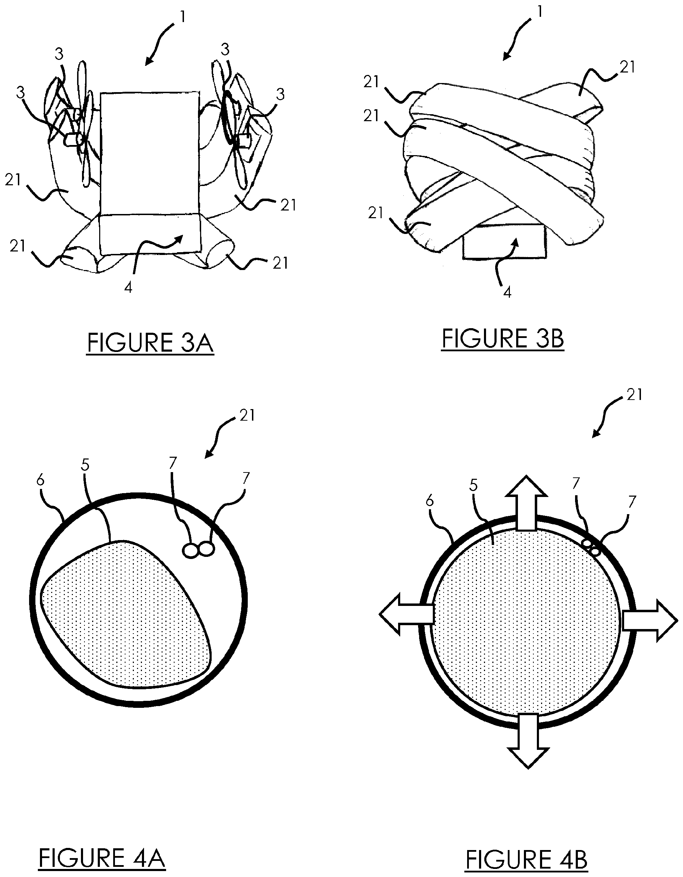

Comme illustré aux figures 4A et 4B, la structure de support 2 comporte une enveloppe intérieure gonflable 5, appelée également chambre à air, et une enveloppe extérieure de protection 6, l'enveloppe gonflable 5 étant montée dans l'enveloppe de protection 6. L'enveloppe de protection 6 est un élément structurel du drone 1 et permet de faire transiter les contraintes mécaniques des moteurs 3.

Les branches 21 de la structure de support 2 peuvent ainsi se plier lorsque l'enveloppe gonflable 5 est dégonflée, ce qui limite l'encombrement de la structure de support 2 et donc, par voie de conséquence, celle du drone 1. En particulier, contrairement à une charnière d'un bras rigide qui ne peut se plier que selon un axe, une structure flexible permet d'offrir une plus grande liberté dans le pliage du drone 1, ce qui limite son encombrement de manière importante comme illustré aux figures 3A et 3B. De manière avantageuse, les branches 21 peuvent être enroulées, ce qui permet de positionner de manière optimale les moteurs 3 les uns par rapport aux autres pour les protéger lors du transport.

Dans cet exemple, l'enveloppe gonflable 5 est réalisée en polyuréthane et possède une épaisseur de paroi de 80µm. Il va de soi que l'enveloppe gonflable 5 pourrait posséder des caractéristiques différentes. Par exemple, l'enveloppe gonflable 5 pourrait être en latex.

L'enveloppe gonflable 5 peut se gonfler et se dégonfler via une valve qui est de préférence positionnée au niveau d'un des bras gonflables 21 afin d'être simple d'accès. De manière préférée, l'enveloppe intérieure 5 est adaptée pour être gonflée à une pression comprise entre 140 MPa (1.4 bar) et 160 MPa (1.6 bar).

L'enveloppe de protection 6 est de préférence réalisée dans un matériau peu extensible afin de limiter l'expansion de l'enveloppe intérieure 5 lors de son gonflage. De préférence, son module d'élasticité (Module de Young) est de l'ordre de 80 GPa. Autrement dit, l'enveloppe de protection 6 permet de définir les dimensions finales de la structure de support 2 lors de son utilisation. De préférence, l'enveloppe de protection 6 est réalisée dans un matériau résistant aux chocs et aux coupures, par exemple, un matériau connu sous la dénomination commerciale DACRON.

En référence aux figures 4A et 4B, la structure de support 2 comporte en outre une pluralité de câbles électriques élémentaires 7 disposés entre l'enveloppe gonflable 5 et l'enveloppe de protection 6 afin de relier les moteurs 3 au module de gestion 4. De manière avantageuse, les câbles électriques élémentaires 7 sont souples afin de permettre d'être pliés avec les branches 21. Dans cet exemple, le centre de la structure de support 2, sur lequel est fixé le module de gestion 4, est relié aux extrémités des branches 21 par lesdits câbles électriques élémentaires 7. Dans cet exemple, chaque câble électrique élémentaire 7 comporte une pluralité de brins métalliques montés dans une gaine en silicone mais il va de soi qu'ils pourraient être différents.

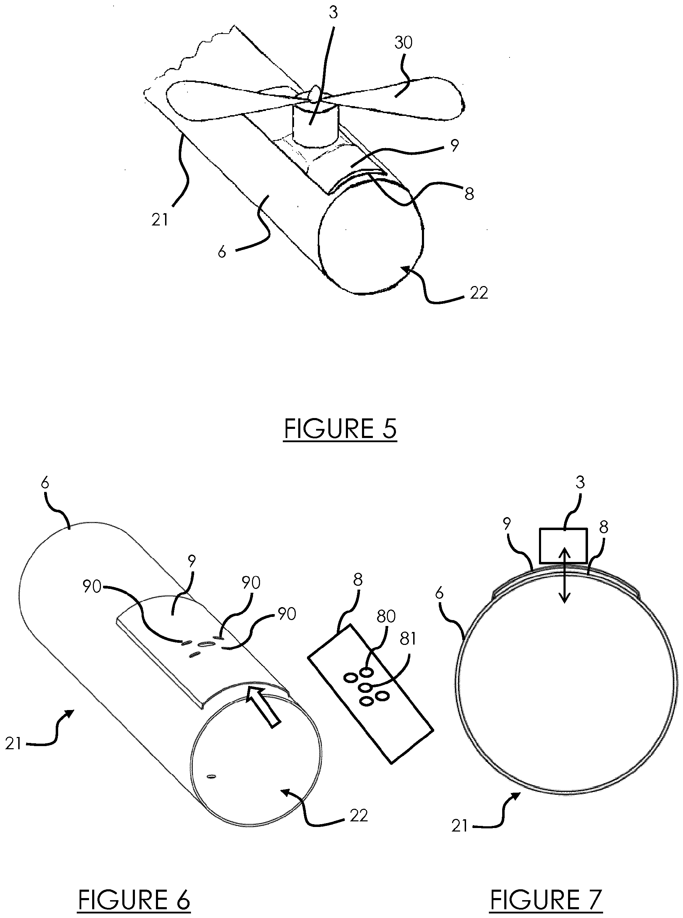

Dans cette forme de réalisation, en référence à la figure 6, l'enveloppe de protection 6 peut être ouverte à l'extrémité axiale de chaque branche 21 de la structure de support 2, en particulier, pour accéder au moteur 3 monté à l'extrémité d'une des branches 21. De manière préférée, l'enveloppe de protection 6 peut comprendre des moyens d'ouverture refermables 22 par une fermeture du type boucles et crochets ou par une fermeture zippée. Il va de soi qu'un capot amovible ou une chaussette flexible pour bloquer le jeu entre les enveloppes 5, 6 pourraient également convenir.

Dans cet exemple, les quatre moteurs 3 du drone 1 sont identiques, de préférence, sans balais plus connus de l'homme du métier sous leur désignation anglaise « brushless ». Chaque moteur 3 comporte une hélice 30 s'étendant au-dessus de la structure de support 2 lors de son utilisation. Néanmoins, il va de soi que l'hélice 30 pourrait s'étendre en-dessous de la structure de support 2. Dans cet exemple, chaque hélice 30 possède un diamètre compris entre 5 cm et 80 cm mais il va de soi qu'il pourrait être différent, notamment, en fonction de la dimension du drone 1.

Chaque moteur 3 est relié au module de gestion 4 par 3 câbles électriques élémentaires 7 afin d'alimenter en courant le moteur 3 et commander la vitesse de rotation de son hélice 30.

En référence aux figures 5 à 7, chaque moteur 3 est fixé à la structure de support 2 au moyen d'un organe de fixation 8 qui permet de positionner de manière pratique, rapide et précise un moteur 3 par rapport à la structure de support 2. Chaque moteur 3 est ici fixé à la surface supérieure de la structure de support 2 mais il va de soi qu'il pourrait être fixé à la surface inférieure. L'extrémité axiale des branches gonflables 21 est ainsi apte à recevoir des chocs sans endommager lesdits moteurs 3.

L'organe de fixation 8 est réalisé en matériau rigide, en plastique ou en matière composite. De manière préférée, l'organe de fixation 8 est cintré selon sa largeur de manière à épouser la forme d'une branche gonflable 21 en position d'utilisation. Ainsi, le positionnement tangentiel peut être réglé de manière précise.

Dans cet exemple, l'organe de fixation 8 comporte plusieurs ouvertures 80 afin de permettre le passage de pièces de liaison (vis et analogues) pour solidariser ensemble un moteur 3, l'organe de fixation 8 et l'enveloppe extérieure de protection 6. L'organe de fixation 8 comporte en outre une ouverture centrale 81 pour le passage de l'axe du moteur 3. Une telle ouverture centrale 81 permet avantageusement de centrer le moteur 3 sur l'organe de fixation 8 lors de son installation.

Dans cette forme de réalisation, le câble électrique élémentaire 7 est connecté de manière indépendante à l'organe de fixation 8, en particulier, extérieurement à ce dernier. Selon une forme de réalisation non représentée, l'organe de fixation 8 comporte en outre une ouverture pour le passage d'au moins un câble électrique élémentaire 7 depuis l'intérieur de la branche gonflable 21 vers l'extérieur afin de se connecter directement au moteur 3. Dans cet exemple, les ouvertures 80 sont circulaires.

De manière avantageuse, chaque branche gonflable 21 comporte un fourreau 9 solidaire de l'enveloppe extérieure 6 dans lequel peut se loger l'organe de fixation 8 de manière à être positionné de manière stable et précise. Dans cet exemple, le fourreau 9 est formé par solidarisation d'une pièce rapportée sur la face extérieure de l'enveloppe extérieure 6 au niveau de la partie supérieure de la structure de support 2. De préférence, la pièce rapportée est cousue. En référence à la figure 6, le fourreau 9 comporte des ouvertures traversantes 90 qui sont alignées avec celles de l'organe de fixation 8 lorsqu'il est monté afin de solidariser ensemble le moteur 3, le fourreau 9 et l'organe de fixation 8 suite à l'insertion et le serrage de vis à travers les ouvertures 80, 90 depuis l'intérieur de la branche 21.

De manière préférée, au moins une partie des ouvertures 90 sont oblongues de manière à autoriser un jeu de positionnement lors du montage du moteur 3. Un tel mode de fixation permet de monter de manière précise et pratique un moteur 3 sur une branche gonflable 21, en particulier, pour régler la position tangentielle. Il est ainsi pratique de s'assurer que tous les axes des moteurs 3 sont alignés lorsque le drone 1 est en position d'utilisation. Ses capacités de vol sont alors optimales.

Chaque organe de fixation 8 est positionné à l'extrémité extérieure d'une branche 21 de la structure de support 2 de manière à ce que les moteurs 3 soient le plus écartés les uns des autres.

Le module de gestion 4 permet de commander les moteurs 3, de préférence, en réglant leur vitesse de rotation. Comme présenté précédemment, le module de gestion 4 est relié aux moteurs 3 par une pluralité de câbles électriques élémentaires 7.

Dans cet exemple, le module de gestion 4 comporte une batterie d'alimentation, par exemple du type Lithium, de répartiteurs d'énergie vers lesdits moteurs 3, une carte électronique de commande de vol et un récepteur de télécommunication, par exemple du type radio. Il va de soi que le module de gestion 4 pourrait comprendre plus ou moins d'équipements.

De manière optionnelle, lorsque le drone 1 est adapté pour suivre une cible portée par l'utilisateur (montre, etc.), le module de gestion 4 peut comporter une puce de localisation du type GPS qui peut être, de manière optionnelle, couplée à un émetteur-récepteur wifi ainsi qu'une carte électronique de commande pour asservir le pilotage du drone 1.

De manière préférée, le module de gestion 4 comporte un organe rigide 40 pour écarter précisément les branches gonflables 21 du drone 1. Dans cet exemple, l'organe rigide 40 se présente sous la forme d'une étoile qui est fixée à l'enveloppe extérieure de protection 6, en particulier au moyen de liens amovibles, de préférence, type boucles et crochets, afin de demeurer plaquer contre la structure de support 2. Ainsi, lors du gonflage, les branches 21 sont parfaitement positionnées les unes par rapport aux autres. De préférence, le drone 1 comporte aussi des moyens d'amortissement (ressorts, matière élastique, etc.) pour limiter le mouvement du module de gestion 4 par rapport à l'organe rigide 40 relié à la structure de support 2 du drone 1.

Dans cet exemple, le module de gestion 4 comporte en outre un équipement vidéo adapté pour capturer des images et des vidéos et les stocker sur une mémoire interne.

Dans cette forme de réalisation, le module de gestion 4 est positionné en-dessous de la structure rigide 2 mais il va de soi qu'il pourrait être positionné au-dessus de la structure rigide 2.

Un exemple de mise en œuvre de l'invention va être dorénavant présenté pour un utilisateur désirant télécommander le drone 1 depuis un flanc de montagne afin de capturer des images et des vidéos.

Dans cet exemple, le drone 1 est transporté dans un sac à dos de l'utilisateur. A cet effet, la structure de support 2 est en position de stockage. L'enveloppe intérieure 5 est dégonflée et permet aux branches 21 de se plier selon une pluralité de points et une pluralité d'inclinaisons (Figures 3A et 3B). De manière avantageuse, les moteurs 3 peuvent être positionnés de manière pratique les uns à côté des autres afin de diminuer l'encombrement du drone 1. Par ailleurs, les câbles électriques élémentaires 7 peuvent également se plier librement à l'intérieur de l'enveloppe extérieure 6 tout en étant protégés par cette dernière. De manière avantageuse, les enveloppes extérieures de protection 6 des branches gonflables 21 de la structure de support 2 peuvent être positionnées de manière à envelopper les moteurs 3 et le module de gestion 4 afin de les protéger lors du transport comme illustré aux figures 3A et 3B.

L'utilisateur n'est ainsi pas gêné par le drone 1 lors de l'ascension du flanc de montagne. Une fois en position, l'utilisateur déplie les branches 21 de la structure de support 2 afin de la gonfler. Dans cet exemple, l'utilisateur utilise une cartouche d'air comprimé qui est connectée à l'ouverture de gonflage de l'enveloppe intérieure 5 afin de la remplir d'air. L'enveloppe intérieure 5 se gonfle pour tendre l'enveloppe extérieure 6 de manière à rigidifier la structure de support 2 dans sa position d'utilisation. Suite au gonflage, les moteurs 3 sont positionnés précisément de manière à ce que leurs axes soient parallèles les uns aux autres. Les câbles électriques élémentaires 7 sont, pour leur part, plaqués entre l'enveloppe intérieure 5 et l'enveloppe extérieure 6 comme illustré à la figure 4B. L'enveloppe extérieure 6 permet ainsi de conduire les différentes contraintes pour permettre notamment aux moteurs 3 de soulever le module de gestion 4.

Les moteurs 3 du drone 1 peuvent alors être activés pour faire voler le drone 1 et capturer des images. De manière avantageuse, la structure de support 2 est résistante aux chocs étant donné qu'elle est gonflable. En outre, grâce à sa structure de support 2, le drone 1 peut avantageusement flotter à la surface de l'eau et décoller depuis cette dernière.

Pour plier le drone 1, il suffit de dégonfler l'enveloppe intérieure 5 et de plier les branches gonflables 21 de manière simple et pratique. Le drone 1 peut de nouveau être rangé dans le sac à dos de l'utilisateur.

Il a été présenté un gonflage au moyen d'une cartouche de gaz du fait de son faible encombrement et de sa praticité mais Il va de soi que l'enveloppe intérieure 5 pourrait être gonflée de différentes manières, par exemple, au moyen d'une pompe manuelle.

Il va de soi que le drone 1 peut réaliser différentes missions en fonction des équipements qu'il supporte (suivi d'un utilisateur d'une activité sportive, etc). En outre, le drone 1 peut également être utilisé pour des activités militaires, en particulier, pour des opérations de reconnaissance.

Si au cours de l'utilisation un des moteurs 3 heurte un obstacle, le moteur endommagé 3 peut être remplacé de manière pratique. En effet, lorsque la structure de support 2 est dégonflée, il suffit à l'utilisateur d'ouvrir l'extrémité de la branche gonflable 21 à laquelle est attaché le moteur 3 pour accéder aux pièces de liaison (vis). L'utilisateur peut alors désolidariser le moteur 3 de l'organe de fixation 8 et de l'enveloppe extérieure 6 afin de remplacer ledit moteur 3. L'utilisation d'un tel organe de fixation 8 permet de former une liaison rigide avec l'enveloppe extérieure 6 qui demeure souple.

Le montage de l'organe de fixation 8 dans le fourreau 9 permet de régler la position et l'inclinaison tangentielle du moteur 3 afin que les axes des moteurs 3 soient alignés, ce qui améliore la stabilité du drone 1.

Les opérations de maintenance des moteurs 3 peuvent être réalisées de manière rapide et pratique.

## Revendications

1. Aéronef sans pilote télécommandé et pliable (1) comprenant aux moins deux moteurs (3) adaptés pour faire voler l'aéronef (1) et au moins une structure de support (2) comportant une pluralité de branches (21), au moins un moteur (3) étant fixé à chaque branche (21), aéronef **caractérisé par le fait que** la pluralité de branches est une pluralité de branches gonflables (21), et la structure de support (2) est flexible et gonflable de manière à permettre le pliage de ladite structure de support (2) entre une position de stockage et une position d'utilisation.

2. Aéronef (1) selon la revendication 1, dans lequel les branches gonflables (21) forment une étoile.

3. Aéronef (1) selon l'une des revendications 1 à 2, dans lequel la structure de support (2) comporte une enveloppe intérieure gonflable (5) et une enveloppe extérieure de protection (6).

4. Aéronef (1) selon la revendication 3, dans lequel la structure de support (2) comporte au moins un câble électrique élémentaire (7) disposé entre l'enveloppe intérieure gonflable (5) et l'enveloppe extérieure de protection (6).

5. Aéronef (1) selon l'une des revendications 1 à 4, dans lequel chaque branche gonflable (21) comporte des moyens d'ouverture de manière à accéder au volume intérieur de ladite branche gonflable (21).

6. Aéronef (1) selon l'une des revendications 1 à 5, dans lequel chaque branche gonflable (21) comporte un organe rigide de fixation d'un moteur (3).

7. Aéronef (1) selon les revendications 3 et 6, dans lequel l'organe de fixation (8) est monté de manière solidaire à l'enveloppe extérieure de protection (6), de préférence, dans un logement de l'enveloppe extérieure de protection (6).

8. Aéronef (1) selon les revendications 6 et 7, dans lequel l'organe de fixation (8) est cintré de manière à épouser la forme de la surface extérieure de la branche gonflable (21).

9. Aéronef (1) selon les revendications 1 à 8, dans lequel les moteurs (3) sont fixés sur la surface supérieure ou inférieure de la structure de support (2).

## Patentansprüche

1. Ferngesteuertes unbemanntes und zusammenfaltbares Luftfahrzeug (1), umfassend mindestens zwei Motoren (3), die geeignet sind, das Luftfahrzeug (1) fliegen zu lassen, und mindestens eine tragende Struktur (2), aufweisend eine Vielzahl von Schenkeln (21), wobei mindestens ein Motor (3) an jedem Schenkel (21) befestigt ist, wobei das Luftfahrzeug **dadurch gekennzeichnet ist, dass** die Vielzahl von Schenkeln eine Vielzahl aufblasbarer Schenkel (21) ist und die tragende Struktur (2) derart flexibel und aufblasbar ist, dass die tragende Struktur (2) zwischen einer Lagerposition und einer Verwendungsposition zusammenfaltbar ist.

2. Luftfahrzeug (1) nach Anspruch 1, wobei die aufblasbaren Schenkel (21) einen Stern bilden.

3. Luftfahrzeug (1) nach einem der Ansprüche 1 bis 2, wobei die tragende Struktur (2) eine aufblasbare innere Hülle (5) und eine äußere Schutzhülle (6) aufweist.

4. Luftfahrzeug (1) nach Anspruch 3, wobei die tragende Struktur (2) mindestens ein elementares elektrisches Kabel (7) aufweist, das zwischen der aufblasbaren inneren Hülle (5) und der äußeren Schutzhülle (6) angeordnet ist.

5. Luftfahrzeug (1) nach einem der Ansprüche 1 bis 4, wobei jeder aufblasbare Schenkel (21) Öffnungsmittel für den Zugriff auf das Innenvolumen des aufblasbaren Schenkels (21) aufweist.

6. Luftfahrzeug (1) nach einem der Ansprüche 1 bis 5, wobei jeder aufblasbare Schenkel (21) ein starres Befestigungsorgan für einen Motor (3) aufweist.

7. Luftfahrzeug (1) nach den Ansprüchen 3 und 6, wobei das Befestigungsorgan (8) auf der äußeren Schutzhülle (6) vorzugsweise in einem Gehäuse der äußeren Schutzhülle (6) fest verbunden angebracht ist.

8. Luftfahrzeug (1) nach den Ansprüchen 6 und 7, wobei das Befestigungsorgan (8) derart gebogen ist, dass es sich an die Form der äußeren Fläche des aufblasbaren Schenkels (21) anschmiegt.

9. Luftfahrzeug (1) nach den Ansprüchen 1 bis 8, wobei die Motoren (3) auf der oberen oder unteren Fläche der tragenden Struktur (2) befestigt sind.

## Claims

1. A foldable remote-controlled unmanned aircraft (1) comprising at least two motors (3) adapted to fly the aircraft (1) and at least one support structure (2) comprising a plurality of branches (21), at least one motor (3) being attached to each branch (21), which aircraft is **characterised by** the fact that the plurality of branches is a plurality of inflatable branches (21), the support structure (2) is flexible and inflatable so as to allow folding of said support structure (2) between a storage position and a use position.

2. The aircraft (1) according to claim 1, wherein the inflatable branches (21) form a star.

3. The aircraft (1) according to one of claims 1 to 2, wherein the support structure (2) comprises an internal inflatable envelope (5) and an external protective envelope (6).

4. The aircraft (1) according to claim 3, wherein the support structure (2) includes at least one elementary electric cable (7) disposed between the internal inflatable envelope (5) and the external protective envelope (6).

5. The aircraft (1) according to one of claims 1 to 4, wherein each inflatable branch (21) comprises opening means so as to access the internal volume of said inflatable branch (21).

6. The aircraft (1) according to one of claims 1 to 5, wherein each inflatable branch (21) comprises a rigid member for attaching a motor (3).

7. The aircraft (1) according to claims 3 and 6, wherein the attachment member (8) is mounted integral with the external protective envelope (6), preferably in a housing of the external protective envelope (6).

8. The aircraft (1) according to claims 6 and 7, wherein the attachment member (8) is bent so as to fit snugly the shape of the external surface of the inflatable branch (21).

9. The aircraft (1) according to claims 1 to 8, wherein the motors (3) are attached to the upper or lower surface of the support structure (2).
